Europäisches Patentamt

European Patent Office

Office européen des brevets

(11) Publication number: **0 152 980**
**A1**

# EUROPEAN PATENT APPLICATION

(21) Application number: 85200126.2

(22) Date of filing: 01.02.85

(51) Int. Cl.⁴: **F 16 L 3/00, E 04 B 1/00,**
**E 03 C 1/02**

(30) Priority: 03.02.84 NL 8400348

(43) Date of publication of application: 28.08.85
**Bulletin 85/35**

(84) Designated Contracting States: **BE DE GB LU NL SE**

(71) Applicant: **WILMA NEDERLAND B.V., Kasteelsingel 10,
NL-6001 EZ Weert (DE)**

(72) Inventor: **Soederhuizen, Robbert Jan, 27 Mozartlaan,
NL-5283 KB Boxtel (NL)**
Inventor: **Heeren, Roland Cornelis, 9 Tornerbeek,
NL-5032 EA Tilburg (NL)**

(74) Representative: **Hoorweg, Petrus Nicolaas et al,
OCTROOIBUREAU ARNOLD & SIEDSMA
Sweelinckplein 1, NL-2517 GK The Hague (NL)**

(54) **Bundle of conduits and building provided with such a bundle.**

(57) A bundle (1) of conduits (2, 3, 4, 5) of different kinds for use in a building such as a house, a ship and so on, said bundle (1) comprising inter alia conduits for fluids such as gas and water wherein at predetermined areas the bundle is surrounded by an annular, closed duct (6) communicating on the one hand with a similar duct in the bundle (1) and on the other hand with a branch duct or a stub, said branch duct being connected with the annular duct (6) at arbitrary areas of its circumference so being able to arrange the conduits close the one another, but avoiding difficulties with branching-off a certain duct in the bundle.

Hw/Mv/7 Wilma

Bundle of conduits and building provided with such a bundle
---------------------------------------------------------------

The invention relates to a bundle of conduits of different kinds for use in a building such as a house, a ship and so on, said bundle comprising _inter alia_ conduits for fluids such as gas and water. For a rational building method it is important to have to possibility of previously making and bundling the conduits to be arranged in a building. The inconvenience of such a system is that branching-off a bundle of conduits, which may be different for each building, gives rise to difficulties because the conduits may hinder one another. Moreover, the system requires much space.

The invention has for its object to obviate said inconvenience and provides to this end a bundle which is distinguished in that at predetermined areas the bundle is surrounded by an annular, closed duct communicating on the one hand with a similar duct in the bundle and on the other hand with a branch duct or a stub.

Since the annular duct completely surrounds the bundle, the conduits are close to one another, the branch duct can be connected with the bundle at arbitrary areas of the circumference without the need for taking other types of conduits in the bundle into account.

It is preferred to previously provide the annular duct with standard connections such as stubs, thinned places for removing wall parts and so on.

The annular duct can serve at the same time as a support for covering or ornamental plates to be fixed afterwards.

The invention furthermore relates to a building such as a house or a ship provided with a prefabricated bundle of conduits of the kind set forth above.

In order to optimalize the building method the partitions of the building between the various rooms have to be previously provided with appropriate recesses for accomodating said bundle of conduits.

The invention will be described more fully with reference to two embodiments.

The drawing shows in:

Fig. 1 a vertical view of a bundle of conduits in the shaft of a building in the form of a prefabricated unit embodying the invention,

Fig. 2 a perspective view of part of the bundle of conduits of fig. 1 on an enlarged scale,

Fig. 3 a perspective view of an alternative embodiment of an annular duct.

Referring to the figure reference numeral 1 designates the bundle of conduits comprising, for example, an inlet and an outlet conduit 2, 3 for air heating or ventilation, water pipes and electricity conduits 4 and 5 respectively.

At suitable areas the bundle of conduits is surrounded by an annular duct communicating at each area with the same kind of conduit of the bundle. The annular duct 6 is connected with the conduit 2 and the passage thereof is at least half that of the conduit 2. Thus the overall circumference of the bundle is reduced also because the conduits in the bundle can be disposed close to one another.

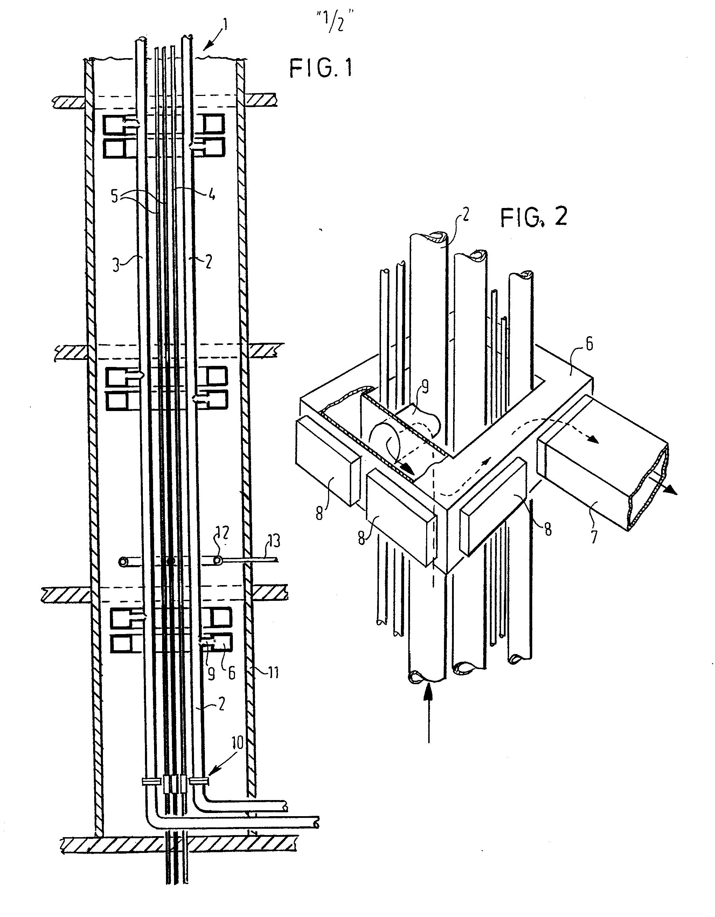

From fig. 2 it is apparent that the annular duct 6 has a polygonal shape, in this case, for example, a quadrangular shape, the cross-section being rectangular. Thus flat outer walls are formed, with which branch ducts 7 can be readily connected. The pace of the branch duct 7 with respect to the inlet conduit 2 in the bundle can be arbitrarily chosen in the "four winds". The annular duct 6 may be provided for this purpose with standard connecting points 8, which can be readily broken up.

As a matter of course, the annular duct 6 is connected through a connecting duct 9 with the conduit 2, said duct 9 being connected with the inner side of the annular

-3-

duct. It will be obvious that also the wall of the conduit 2 can be directly connected with the wall of the duct 6 without the use of an intermediate duct 9.

The bundle of conduits 1 may be provided with connecting means 10, for example, flanges or sockets, where the connection with the conduits previously provided in the foundation or conduits from a heating system can be established.

The building may have a shaft 11 into which the bundle of conduits 1 as a whole can be introduced from the top during the mounting operations. Therefore, the bundle of conduits can be prepared in advance in the factory.

The annular duct 6 may have any desired shape. As stated above, the annular duct 6 of figs. 1 and 2 is polygonal, which is particularly suitable for transporting gas, for example, hot air. Nevertheless the water and electricity conduits may also be coupled with an annular duct 12 with which a branch duct 13 can be suitably connected.

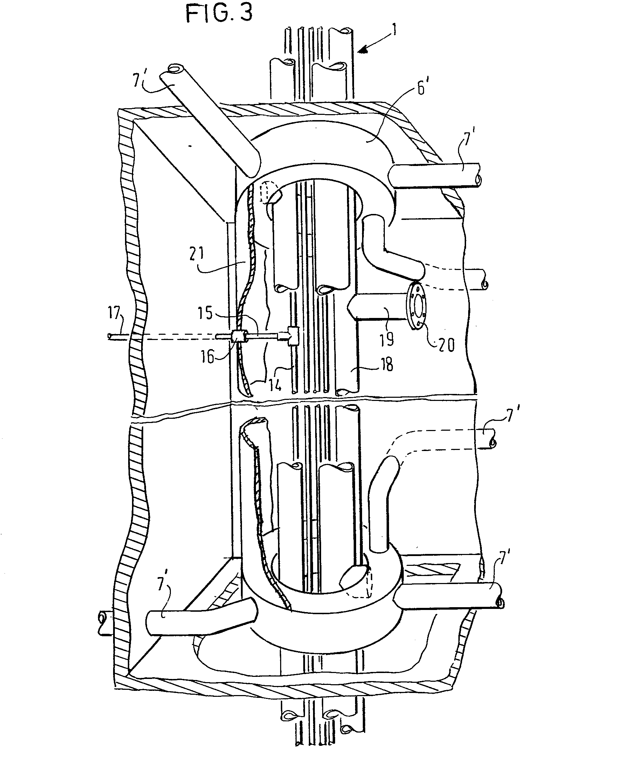

Fig. 3 shows that the annular duct 6 has the shape of a circle in this case; the branch duct 7' can be connected with the outer face of the duct 6' as well as with the bottom and top sides respectively. Obviously a high degree of freedom is thus obtained without disturbance of the conduits in the bundle 1 by the connections.

Within the scope of the invention it is also possible to provide a conduit, for example, 14 directly, without annular duct, with a branch stub 15, which can be connected by means of a socket 16 with a branch duct 17. The same also applies, for example, to a high-pressure tube 18, for example, for vapour, provided with a branch stub 19 having a standard connecting flange 20.

The annular duct of fig. 3 also serve as fastening supports for covering or ornamental plates 21.

The invention is not limited to the embodiments described above.

-----

0152980

Hw/Mv/7Wilma                    -1-

WHAT IS CLAIMED IS:

1. A bundle of conduits of different kinds for use in a building such as a house, a ship and so on, said bundle comprising *inter alia* conduits for transporting fluids such as gas and water, characterized in that at predetermined areas the bundle is surrounded by an annular, closed duct communicating on the one hand with the same kind of conduit in the bundle and on the other hand with a branch duct or stub.

2. A bundle as claimed in claim 1 characterized in that the annular duct is provided with standard connecting means.

3. A bundle as claimed in claim 1 or 2 characterized in that the annular duct has a polygonal shape and its cross-section has straight sides and in that the inner side is in open communication with a gas transport conduit in the bundle and the outer side has a rectangular opening.

4. A bundle as claimed in claims 1 to 3 characterized in that the bundle of conduits and the annular duct(s) constitute a prefabricated building unit.

5. A bundle as claimed in anyone of the preceding claims characterized in that the annular duct(s) constitute(s) a support for a covering or ornamental plate.

6. A building such as a house or a ship provided with a bundle of conduits as claimed in anyone of the preceding claims.

7. A building comprising rooms separated by partitions such as walls, floors and ceilings chracterized in that the partitions have previously made recesses for receiving a prefabricated bundle of conduits.

-----

"1/2"

FIG. 1

FIG. 2

"2/2"

FIG. 3

0152980

0152980

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 353 608  (MASSAU) <br> * Column 2, lines 26-54; figures 1-16 * | 1,6 | F 16 L    3/00 <br> E 04 B    1/00 <br> E 03 C    1/02 |
| A | EP-A-0 006 015  (E.J. KUMP) <br> * Figure 3 * | 1 | |
| A | US-A-4 052 090  (STAFFORD) <br> * Figure 2 * | 1 | |

TECHNICAL FIELDS
SEARCHED (Int. Cl.4)

F 16 L
E 04 B
E 03 C
E 03 B

The present search report has been drawn up for all claims

| Place of search <br> THE HAGUE | Date of completion of the search <br> 15-04-1985 | Examiner <br> ANGIUS P. |
|---|---|---|